# EUROPÄISCHE PATENTSCHRIFT

(11) **EP 1 053 856 B1**
(45) Veröffentlichungstag und Bekanntmachung des Hinweises auf die Patenterteilung: **04.08.2004**
(21) Anmeldenummer: 00108601.6
(22) Anmeldetag: 20.04.2000
(51) Int. Cl.: B29C 49/38, B29C 49/04, B29L 23/00

(54) **Vorrichtung zur Herstellung von Kunststoff-Wellrohren**
Apparatus for producing corrugated plastic pipes
Appareil permettant de produire des tuyaux ondulés en matière plastique

(30) Priorität: 18.05.1999 DE 19922726
(43) Veröffentlichungstag der Anmeldung: 22.11.2000
(73) Patentinhaber: Hegler, Ralph-Peter, Dr.-Ing., 97688 Bad Kissingen (DE)
(72) Erfinder: Hegler, Ralph-Peter, Dr.-Ing., 97688 Bad Kissingen (DE)
(74) Vertreter: Rau, Manfred, Dr. Dipl.-Ing.

(56) Entgegenhaltungen:
- WO-A-98/32584
- DE-C- 19 702 637
- US-A- 4 492 551
- US-A- 5 582 849
- US-A- 5 824 351

## Beschreibung

Die Erfindung betrifft eine Vorrichtung nach dem Oberbegriff des Anspruches 1.

Bei einer derartigen aus der EP 0 065 729 B1 (entspr. US 4,492,551) bekannten Vorrichtung werden die sich paarweise zu einer Form ergänzenden Halbkokillen auf einem horizontalen Maschinentisch gleitend verschoben. Um ein reibungsarmes und verschleißarmes Gleiten zu erreichen, weist der Maschinentisch eine Auflageplatte aus einem Gleitlagermetall, beispielsweise Bronze, auf, auf der die aus Stahl bestehenden Halbkokillen verschoben werden. Die Kühlwasserzu- und -abführung erfolgt durch entsprechende Anschlüsse in dem Maschinentisch, wobei die in den Halbkokillen ausgebildeten Einlässe und Auslässe der Kühlwasserkanäle mit diesen Anschlüssen auf der Formstrecke in Überdeckung kommen. Entsprechendes gilt für die Vakuumkanäle.

Aus der EP 0 359 089 B1 ist eine Vorrichtung zur Herstellung von Kunststoff-Wellrohren bekannt, bei der die sich paarweise zu einer Form ergänzenden Halbkokillen an zwei übereinanderliegenden Ketten geführt werden. Hierbei sind an den Ketten Trägerelemente fest angebracht, an denen wiederum die Halbkokillen auswechselbar angeordnet sind. Die Vakuumkanäle und die Kühlwasserkanäle müssen durch diese Trägerelemente zu den eigentlichen Halbkokillen geführt werden. Dies macht außerordentlich aufwendige Konstruktionen erforderlich. Die Führung der Kühl- und Vakuumkanäle ist kompliziert, was schon nach relativ kurzer Betriebsdauer zu Kühlwasser- und Vakuumverlusten führen kann. An den Trennflächen zwischen den Halbkokillen und den Trägern tritt Verschleiß auf; dies kann schon nach kurzer Betriebsdauer zu einem Versatz der Halbkokillen zueinander führen und damit zu vergrößerten Toleranzen bei den zu erzeugenden Wellrohren.

Aus der US 5,582,849 A ist es bekannt, bei einer Vorrichtung zur Herstellung von Wellrohren Halbkokillen lösbar auf L-förmigen Kokillen-Trägern zu befestigen, die selber endlos umlaufen. Über seitliche Führungsschienen wird auf einer Formstrecke über eine Leitung Vakuum zugeführt, das über Schlitze weitergegeben wird. Wie im einzelnen die Kokillenhälften ausgebildet sind, ist nicht angegeben. Die Kokillen-Einsätze sind leicht austauschbar. Auftretende thermische Probleme werden nicht gelöst.

Aus der DE 197 02 637 C1 und der WO 98/32584 ist eine Vorrichtung zur Herstellung von Kunststoff-Wellrohren bekannt, bei der Halbkokillen an Führungs- und Gleitelementen auswechselbar befestigt sind. Die Kokillen bestehen aus Aluminium, die Führungs- und Gleitelemente bestehen aus Stahl. Das Grundproblem, das bei dieser bekannten Vorrichtung gelöst werden soll, besteht darin, den Eintritt von Kühlflüssigkeit in Vakuumkanäle zu verhindern. Dies wird dadurch erreicht, dass Kühlflüssigkeitskanäle in die unteren Führungs- und Gleitelemente gelegt werden, während die Vakuumkanäle in die oberen Führungs- und Gleitelemente integriert sind.

Der Erfindung liegt die Aufgabe zugrunde, eine Vorrichtung der gattungsgemäßen Art so auszugestalten, daß mit geringem konstruktiven Aufwand eine Erhöhung der Leistung ohne Verschleißerhöhung möglich ist. Diese Aufgabe wird erfindungsgemäß durch die Merkmale im Kennzeichnungsteil des Anspruches 1 gelöst. Durch die erfindungsgemäßen Maßnahmen wird mit konstruktiv geringem Aufwand erreicht, daß die Halbkokillen zumindest in erheblichem Umfang aus einem sehr gut wärmeleitenden Material, das zudem leicht ist, bestehen. Dies ermöglicht eine Erhöhung der Produktionsgeschwindigkeit bei gleichzeitig ausreichend guter Wärmeabführung. Da die die Halbkokillen zusammendrückenden Führungen gegen Stahl anliegen und da die Halbkokillen über ihre Unterplatten auf der Auflageplatte aus Gleitlagermetall gleiten, tritt kein nennenswerter Verschleiß auf. Das Kühlmedium und das Vakuum werden über nur eine Dicht-Gleitfläche, nämlich - wie bei der gattungsgemäßen Vorrichtung - über den Maschinentisch direkt in die Halbkokillen, übertragen.

Durch die Ausgestaltung nach Anspruch 2 wird sichergestellt, daß der Kern im Grundkörper flächig anliegt, wodurch eine gute Wärmeleitung sichergestellt wird. Eine einfache Ausgestaltung geben die Ansprüche 3 und 4 wieder, die eine besonders stabile, aber trotzdem die Vorteile der Erfindung aufweisende Halbkokille beinhalten. Insbesondere bei dieser Ausgestaltung kann der Kern unterschiedliche Formausnehmungen aufweisen; der Grundkörper kann für Kerne mit unterschiedlichen Formausnehmungen verwendet werden. Bei dieser Ausgestaltung können nach Anspruch 5 die Kühlkanäle im Grundkörper ausgebildet werden, so daß keinerlei Dichtungsprobleme auftreten. Eine mehrteilige, insbesondere zweiteilige Ausgestaltung ergibt sich aus den Ansprüchen 6 und 7.

Die Ansprüche 8 und 9 geben wieder, daß der direkte Kontakt zwischen benachbarten Halbkokillen über die Grundkörper, also über das stabilere Metall, nämlich Stahl, erfolgt, wodurch ein Verschleiß der Kerne vermieden wird. Dies ist bei der Ausgestaltung nach Anspruch 8 besonders vorteilhaft.

Anspruch 10 gibt in an sich bekannter Weise eine besonders verschleißarme Führung wieder.

Anspruch 11 gibt einen bevorzugten Werkstoff für den Kern wieder.

Anspruch 12 gibt eine weitere abgewandelte Ausführungsform wieder.

Weitere Merkmale, Vorteile und Einzelheiten der Erfindung ergeben sich aus der nachfolgenden Beschreibung eines Ausführungsbeispieles anhand der Zeichnung. Es zeigt
- Fig. 1: eine Draufsicht auf eine Vorrichtung nach der Erfindung,
- Fig. 2: eine Stirnansicht eines Halbkokillen-Paares der Vorrichtung nach der Erfindung,
- Fig. 3: eine Innen-Ansicht der Halbkokille nach Fig. 2,
- Fig. 4: eine abgewandelte Ausführungsform einer Halbkokille in einer Stirnansicht gemäß dem Sichtpfeil IV in Fig. 5,
- Fig. 5: eine Innen-Ansicht der Halbkokille entsprechend dem Sichtpfeil V in Fig. 4 und
- Fig. 6: eine weitere abgewandelte Ausführungsform einer Halbkokille in einer Stirnansicht.

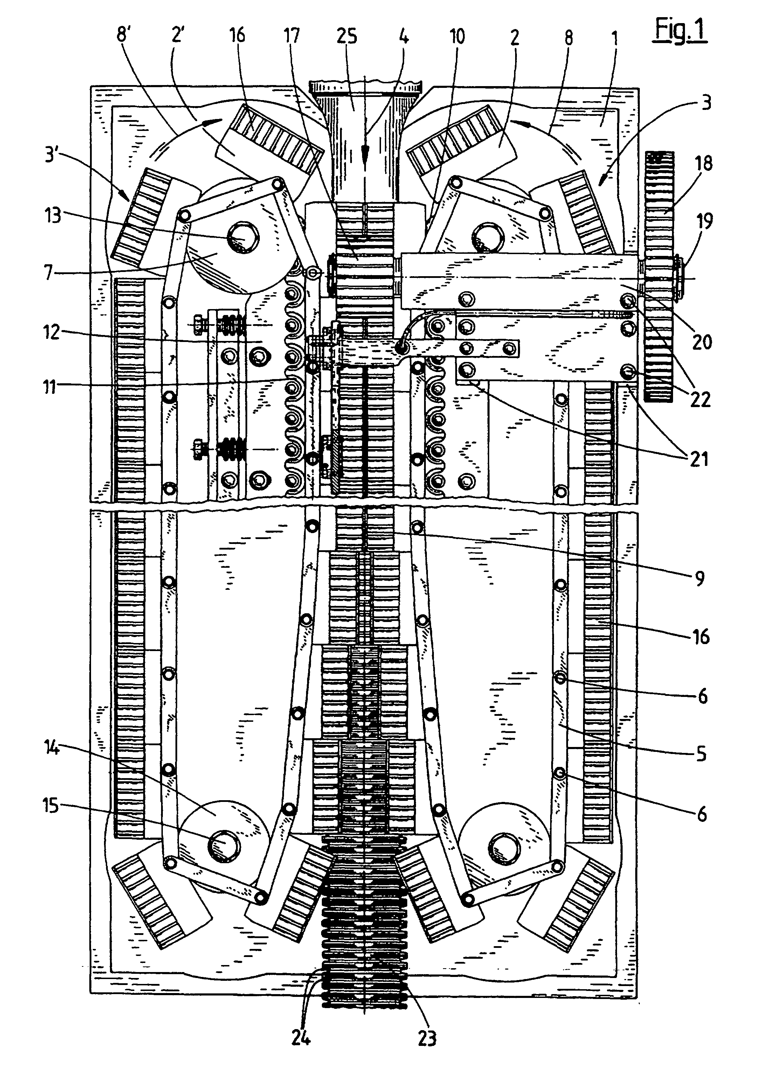

Wie Fig. 1 erkennen läßt, weist die Vorrichtung zur Herstellung von Kunststoffrohren mit Querrillen, sogenannten Wellrohren, einen Maschinentisch 1 auf, auf dem Halbkokillen 2 bzw. 2' angeordnet sind, die jeweils zu zwei sogenannten Ketten 3 bzw. 3' miteinander verbunden sind. Hierzu ist an jeder Halbkokille 2 bzw. 2' in ihrem außenliegenden, in Produktionsrichtung 4 vorderen Bereich eine Lasche 5 mittels eines Anlenkbolzens 6 angelenkt, die an der entsprechenden Stelle der nachfolgenden Halbkokille 2 bzw. 2' ebenfalls mittels eines solchen Anlenkbolzens 6 angebracht ist. Die so gebildeten Ketten 3, 3'sind an ihrem in Produktionsrichtung 4 gesehen rückwärtigen Ende über als Einlaufrollen 7 dienende Umlenkräder geführt. Die einzelnen Halbkokillen 2, 2' werden beim Umlauf der Ketten 3, 3' entsprechend den Umlaufrichtungspfeilen 8 bzw. 8' in eine Formstrecke 9 eingeschwenkt, in der jeweils zwei Halbkokillen 2, 2' zu einem Kokillenpaar vereinigt werden, wobei wiederum in Produktionsrichtung 4 hintereinanderfolgende Kokillenpaare dicht an dicht liegen. Um ein schnelles Schließen der Halbkokillen 2, 2' zu einer parallelen und aneinanderliegenden Stellung zu erreichen, sind sogenannte Schließrollen 10 vorgesehen, die die in Produktionsrichtung 4 hinteren Enden der Halbkokillen 2, 2' beschleunigt zusammenführen.

In der Formstrecke 9 selber werden die aneinanderliegenden Halbkokillen 2, 2' mittels Führungsrollen 11, die in Führungsleisten 12 mittels Wälzlagern drehbar gelagert sind, gegeneinander gedrückt. Die Einlaufrollen 7 sind um Achszapfen 13 drehbar am Maschinentisch 1 angebracht.

Am in Produktionsrichtung 4 vorderen Ende des Maschinentisches 1 sind ebenfalls als Umlenkräder dienende Rücklaufrollen 14 um Achszapfen 15 drehbar gelagert, um die die Ketten 3 bzw. 3' umgelenkt und zu den Einlaufrollen 7 zurückgeführt werden. Wie Fig. 1 zu entnehmen ist, enden die Führungsleisten 12 mit Führungsrollen 11 schon um die Länge mehrerer Halbkokillen 2 bzw. 2' vor den Rücklaufrollen 14, so daß die Halbkokillen 2 bzw. 2' wieder parallel zueinander und quer zur Produktionsrichtung 4 voneinander weg bewegt werden können, bevor sie von den Rücklaufrollen 14 verschwenkt werden.

An der Oberseite der Halbkokillen 2, 2' ist eine Verzahnung 16 ausgebildet, wobei die beiden Verzahnungen 16 der einander paarweise zugeordneten Halbkokillen 2, 2' miteinander fluchten, so daß von oben ein gemeinsames Antriebsritzel 17 in diese Verzahnung 16 eingreifen kann, das die Halbkokillen 2, 2' in der Formstrecke 9 als geschlossene Form durch die Formstrecke 9 schiebt. Der Antrieb dieses Antriebsritzels 17 erfolgt in üblicher Weise von einem nicht dargestellten Motor über ein Antriebszahnrad 18, das auf einer Welle 19 drehfest befestigt ist, die wiederum das Antriebsritzel 17 trägt. Die Welle 19 ist in einem Lagerbock 20 gelagert, der über Distanzprismen 21 gegenüber dem Maschinentisch abgestützt und mit letzterem mittels Schrauben 22 fest verbunden ist.

Auf der dargestellten Vorrichtung werden Kunststoff-Wellrohre 23 mit einer Querprofilierung, d.h. mit über deren Umfang umlaufenden Querrillen 24 hergestellt, wie sie beispielsweise als Schutzrohre für Elektrokabel eingesetzt werden. Hierzu ist ein Extruder vorgesehen, von dem nur der Spritzkopf 25 angedeutet ist, aus dem ein nicht sichtbarer Schlauch extrudiert wird, der in noch warmplastischem Zustand in die in der Formstrecke 9 gebildete Form einläuft, in der die Querprofilierung ausgebildet wird. Mit dieser Vorrichtung können in gleicher Weise sogenannte Verbundrohre hergestellt werden, die äußerlich dem Rohr 23 gleichen und innen noch mit einem durchgehend glatten Rohr einstückig ausgebildet sind.

In der Formstrecke 9 werden die paarweise einander zugeordneten Halbkokillen 2, 2' gekühlt; außerdem erfolgt die Ausformung der Querrillen 24 durch Vakuumbeaufschlagung des in der Formstrecke 9 gebildeten Formraums 26. Soweit die Vorrichtung bis hierher beschrieben ist, ist sie beispielsweise aus der EP 0 065 729 B1 (entspr. US 4,492,551) bekannt.

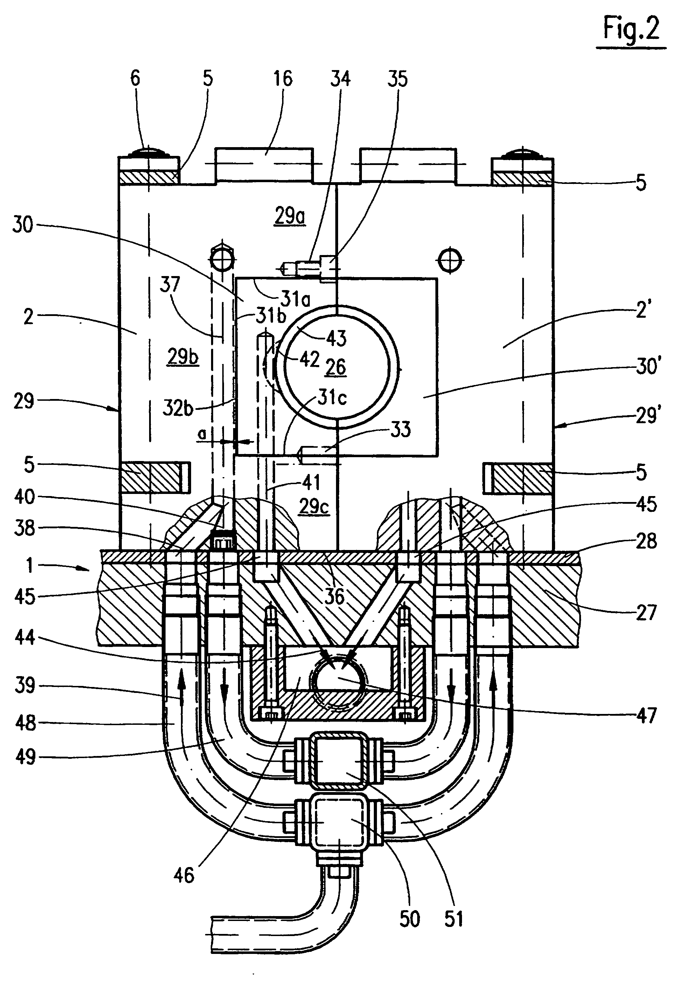

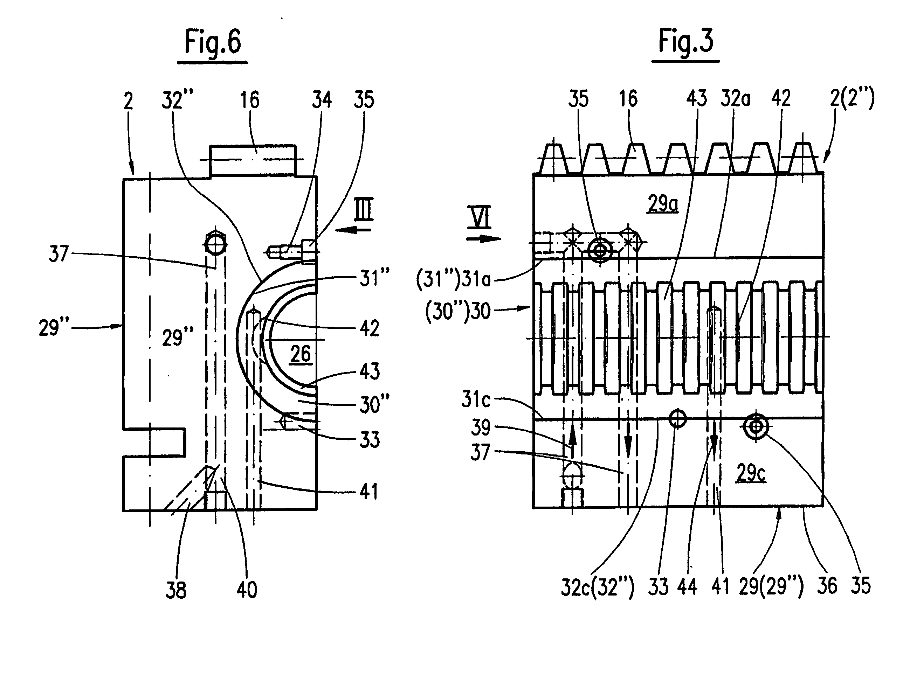

Wie Fig. 2 entnehmbar ist, weist der Maschinentisch 1 eine Grundplatte 27 aus Stahl und eine hierauf angebrachte Auflageplatte 28 aus einem Gleitlagermetall, beispielsweise Bronze, auf. Die Halbkokillen 2, 2' bestehen jeweils aus einem äußeren Grundkörper 29, 29' aus Stahl und einem Kern 30, 30' aus Aluminium bzw. einer Aluminiumlegierung. Der Kern 30, 30' weist ebene, in der Regel rechtwinklig zueinanderstehende Außenflächen 31a, 31b, 31c auf, die an entsprechenden, eine den Kern 30, 30' aufnehmende Ausnehmung begrenzenden Innenflächen 32a, 32b, 32c des Grundkörpers 29 bzw. 29' flächig, d.h. dicht anliegen, so daß eine direkte Wärmeleitung vom Kern 30, 30' zum Grundkörper 29, 29' über alle Außenflächen 31a, 31b, 31c bzw. Innenflächen 32a, 32b, 32c erfolgen kann. Wie Fig. 2 zu entnehmen ist, weist jeder Grundkörper 29, 29' die Form eines C auf. Er weist also einen waagerecht verlaufenden oberen Schenkel 29a, einen vertikalen Steg 29b und einen eine Unterplatte 29c bildenden waagerechten unteren Schenkel auf. Wie den Fig. 2 und 3 entnehmbar ist, ist der Kern 30, 30' in Produktionsrichtung 4 mittels eines im Berührungsbereich zwischen einer Außenfläche 31c und einer Innenfläche 32c angeordneten Zentrierstiftes 33 festgelegt. Die Befestigung eines Kerns 30, 30' im Grundkörper 29, 29' ist mittels Schrauben 34 vorgenommen, die - wie Fig. 2 entnehmbar ist - ausschließlich in den Grundkörper 29 bzw. 29' geschraubt sind, und nur mit ihrem Kopf 35 in den Kern 30, 30' eingreifen.

Die Halbkokillen 2, 2' liegen mit ihren am jeweiligen Grundkörper 29, 29' ausgebildeten Auflageflächen 36 auf der Auflageplatte 28 auf. Von hier aus erstrecken sich Kühlwasserkanäle 37 durch den Grundkörper 29, die durch in der Nähe der vertikalen Innenfläche 32b geführte Bohrungen gebildet sind. Die Kühlwasserkanäle 37 sind ausschließlich im Grundkörper 29 bzw. 29' ausgebildet, und zwar in sehr geringem Abstand a von der Innenfläche 32b. Dem Kühlwasserkanal 37 wird Kühlwasser am Einlaß 38 zugeführt; es durchströmt den Kühlwasserkanal 37 in Strömungsrichtung 39 und tritt am Auslaß 40 wieder aus dem Grundkörper 29 bzw. 29' aus.

Ebenfalls von der Auflagefläche 36 erstrecken sich Vakuumkanäle 41 nach oben, und zwar durch den Grundkörper 29, 29' und den Kern 30, 30' bis in die unmittelbare Nachbarschaft zum Formraum 26. Von den Vakuumkanälen 41 münden zahlreiche Vakuumschlitze 42 in die Formausnehmungen 43, die in den Halbkokillen 2, 2' zur Bildung des Formraums 26 ausgebildet sind und die eine zu der Außenform des Rohres 23 komplementäre Form aufweisen. Einer gesonderten Dichtung zwischen der Außenfläche 31c und der Innenfläche 32c im Bereich der jeweiligen Vakuumkanäle 41 bedarf es nicht, da diese Flächen dicht aufeinanderliegen und ein geringes Maß an Fehlluft ohne praktische Bedeutung ist. Die Luft-Strömungsrichtung in den Vakuumkanälen 41 ist durch die Strömungsrichtungspfeile 44 gekennzeichnet. In dem Maschinentisch 1 sind Vakuumanschlüsse 45 ausgebildet, mit denen die Vakuumkanäle 41 in der Formstrecke 9 in Überdeckung kommen. Diese Vakuumanschlüsse 45 münden in eine an der Unterseite der Grundplatte 27 angebrachte Vakuumkammer 46, in die wiederum ein Anschluß 47 einer nicht dargestellten Vakuumpumpe einmündet.

Die Einlässe 38 und die Auslässe 40 der Kühlwasserkanäle 37 kommen in vergleichbarer Weise in Überdeckung mit im Maschinentisch 1 ausgebildeten Kühlwasseranschlüssen 48 und entsprechenden Kühlwasserabführungen 49. Die Kühlwasseranschlüsse 48 sind an eine zentrale Kühlwasserzuführleitung 50 und die Kühlwasserabführungen 49 an eine zentrale Kühlwasserabführleitung 51 angeschlossen.

Beim Formwechsel können in ihren Außenabmessungen identische Kerne 30, 30' mit unterschiedlichen Formräumen 26 und entsprechend unterschiedlichen Formausnehmungen 43 verwendet werden, wobei dieselben Grundkörper 29, 29' Verwendung finden.

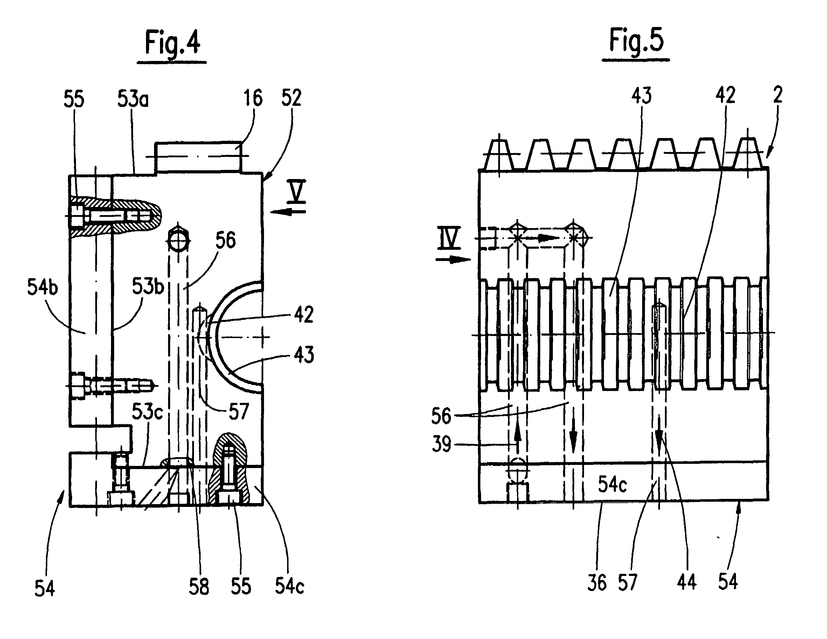

Bei der Ausführungsform nach den Fig. 4 und 5 ist ein bezogen auf die Gesamtquerschnittsfläche der jeweiligen Halbkokille 2, 2' größerer Kern 52 aus Aluminium, Aluminiumlegierung oder einem anderen geeigneten gut wärmeleitenden Material vorhanden, der an seiner oberen Außenfläche 53a mit der Verzahnung 16 versehen ist. Der Kern 52 ist mit einem Grundkörper 54 umkleidet, der aus einer einen vertikalen Steg bildenden Platte 54b und einer einen horizontalen unteren Schenkel bildenden Unterplatte 54c gebildet ist. Wie Fig. 4 entnehmbar ist, ist der Grundkörper 54 zweiteilig ausgebildet. Gleichermaßen wie bei der Ausführung nach den Fig. 2 und 3 erstreckt sich der Grundkörper 54 bei der Ausgestaltung nach den Fig. 4 und 5 über die volle Länge einer Halbkokille 2, 2', so daß in Produktionsrichtung 4 aneinanderliegende Halbkokillen 2, 2' jeweils mit ihren Grundkörpern 29, 29' bzw. 54 aneinanderliegen. Die Grundkörper 29, 29' bzw. 54 erstrecken sich im übrigen auch bis zur Trennfläche zwischen zwei Halbkokillen 2, 2' eines Kokillen-Paares.

Der vertikale Steg 54b und die Unterplatte 54c sind mit dem Kern 52 mittels Paßschrauben 55 verbunden. Von der Auflagefläche 36 erstrecken sich Kühlwasserkanäle 56 und Vakuumkanäle 57 durch den Kern 52, wobei bei dieser Ausführungsform auch die Kühlwasserkanäle 56 im wesentlichen im Kern 52 ausgebildet sind. Zwischen der Unterplatte 54c und dem Kern 52 muß also eine Dichtung 58 vorgesehen sein.

Bei dieser Ausführungsform werden bei einem Formwechsel die gesamten Halbkokillen 2, 2' ausgewechselt.

Fig. 6 gibt eine Ausführungsform wieder, die der nach den Fig. 2 und 3 außerordentlich ähnlich ist und für die die Innenansicht gemäß Fig. 3 in vollem Umfang gilt. Deshalb sind in Fig. 3 die für Fig. 6 neu eingeführten Bezugsziffern jeweils in Klammern neben den Bezugsziffern angegeben, die für das Ausführungsbeispiel nach den Fig. 2 und 3 eingeführt wurden. Soweit Teile identisch sind, werden identische Bezugsziffern verwendet. Soweit die Teile funktionell gleich aber konstruktiv anders ausgebildet sind, werden die für die Fig. 2 und 3 verwendeten Bezugsziffern mit einem hochgesetzten Doppelstrich verwendet.

Die Ausführungsform nach Fig. 6 unterscheidet sich von der nach den Fig. 2 und 3 dadurch, daß der äußere Grundkörper 29'' aus Stahl einen Kern 30'' aus Aluminium bzw. einer Aluminiumlegierung aufweist, der eine halbzylindrische Außenfläche 31" aufweist. Entsprechend wird die den Kern 30" aufnehmende Ausnehmung im Grundkörper 29" von einer halbzylindrischen Innenfläche 32" begrenzt, an der der Kern 30" mit seiner Außenfläche 31" flächig, d.h. dicht anliegt. Die Befestigung des Kerns 30" im Grundkörper 29" und die sonstige Ausgestaltung des Grundkörpers 29" und des Kerns 30" entspricht der Ausführungsform nach den Fig. 2 und 3.

## Patentansprüche

1. Vorrichtung zur Herstellung von Kunststoff-Wellrohren (23) mit Querrillen (24),
bei der mit einer Formausnehmung (43) versehene, sich auf einer in Produktionsrichtung (4) erstreckenden Formstrecke (9) jeweils paarweise zu einer Form ergänzende Halbkokillen (2, 2') auf einem mit einer Auflageplatte (28) aus Gleitlagermetall versehenen, horizontalen Maschinentisch (1) im Kreislauf geführt angeordnet sind,
wobei die Halbkokillen (2, 2') mit ihren unteren Auflageflächen (36) gleitend auf der Auflageplatte (28) aufliegen und horizontal und quer zur Produktionsrichtung (4) mittels einer Führung (11, 12) zusammendrückbar sind,
wobei der Formstrecke (9) ein Spritzkopf (25) eines Extruders vorgeordnet ist,
wobei die Halbkokillen (2, 2') mit mit der jeweiligen Formausnehmung (43) verbundenen Vakuumkanälen (41, 57) versehen sind, die in der Formstrecke (9) in im Maschinentisch (1) ausgebildete Vakuumanschlüsse (45) einmünden, und
wobei die Halbkokillen (2, 2') mit Kühlmediumkanälen (37, 56) versehen sind, die in der Formstrecke (9) in im Maschinentisch (1) ausgebildete Kühlmediumanschlüsse (48) und Kühlmediumabführungen (49) einmünden, **dadurch gekennzeichnet,**
**daß** die Halbkokillen (2, 2') jeweils einen Kern (30, 30', 52, 30") aufweisen,
der aus einem Metall mit höherer Wärmeleitfähigkeit und geringerem spezifischen Gewicht als Stahl besteht,
in dem die Formausnehmung (43) ausgebildet ist,
in dem zumindest im wesentlichen die Vakuumkanäle (41, 57) ausgebildet sind und
der von einem Grundkörper (29, 29', 54, 29") aus Stahl zumindest L-förmig umgeben ist, an dem die Auflagefläche (36) ausgebildet ist und an dem die Führung (11, 12) anliegt.

2. Vorrichtung nach Anspruch 1, **dadurch gekennzeichnet,**
**daß** der Kern (30, 30', 52) zumindest im wesentlichen mit rechteckigem Querschnitt mit Außenflächen (31a, 31b, 31c, 53a, 53b, 53c) ausgebildet ist, an denen der Grundkörper (29, 29', 54) mit Innenflächen (32a, 32b, 32c) anliegt.

3. Vorrichtung nach Anspruch 1 oder 2, **dadurch gekennzeichnet,**
**daß** der Grundkörper (29, 29', 29") einstückig ausgebildet ist.

4. Vorrichtung nach Anspruch 3, **dadurch gekennzeichnet,**
**daß** der Grundkörper (29, 29', 29") etwa C-förmig ausgebildet ist und den Kern (30, 30') aufnimmt.

5. Vorrichtung nach einem der Ansprüche 1 bis 3, **dadurch gekennzeichnet,**
**daß** die Kühlmediumkanäle (37) im Grundkörper (29, 29', 29'') ausgebildet sind.

6. Vorrichtung nach Anspruch 1 oder 2, **dadurch gekennzeichnet,**
**daß** der Grundkörper (54) aus einer Unterplatte (54c) und einem plattenartigen vertikalen Steg (54b) gebildet ist.

7. Vorrichtung nach Anspruch 6, **dadurch gekennzeichnet,**
**daß** der Grundkörper (54) zweiteilig ausgebildet ist.

8. Vorrichtung nach einem der Ansprüche 1 bis 7, **dadurch gekennzeichnet,**
**daß** auf der Formstrecke (9) in Produktionsrichtung (4) benachbarte Halbkokillen (2, 2, 2', 2') jeweils mit ihren Grundkörpern (29, 29, 29', 29', 54, 54) aneinanderliegen.

9. Vorrichtung nach einem der Ansprüche 1 bis 8, **dadurch gekennzeichnet,**
**daß** auf der Formstrecke (9) die sich jeweils paarweise zu einer Form ergänzenden Halbkokillen (2, 2') mit ihren Grundkörpern (29, 29', 54, 54') aneinanderliegen.

10. Vorrichtung nach einem der Ansprüche 1 bis 9, **dadurch gekennzeichnet, daß** die Führung (11, 12) mittels Wälzlagern gelagerte Führungsrollen (11) aufweist.

11. Vorrichtung nach einem der Ansprüche 1 bis 10, **dadurch gekennzeichnet,**
**daß** der Kern (30, 30', 52, 30") aus Aluminium oder einer Aluminiumlegierung besteht.

12. Vorrichtung nach Anspruch 4, **dadurch gekennzeichnet, daß** der Kern (30") eine halbzylindrische Außenfläche (31") aufweist.

## Claims

1. An apparatus for the manufacture of corrugated plastic pipes (23) with cross grooves (24),
in which half shells (2,2'), which are provided with a mold recess (43) and combine in pairs to form a mold in a molding path (9) which runs in the direction of production (4), are disposed to circulate on a horizontal machine bed (1), which is provided with a cover plate (28) of antifriction metal;
the half shells (2, 2') resting by their lower bearing surfaces (36) on the cover plate (28) and being pressed together transversely of the direction of production (4) by means of a guide (11, 12);
an extrusion head (25) of an extruder being disposed upstream of the molding path (9);
the half shells (2, 2') being provided with vacuum ducts (41, 57), which are connected to the respective mold recess (43) and which, in the molding path (9), open into vacuum connections (45) formed in the machine bed (1); and
the half shells (2, 2') being provided with coolant lines (37, 56), which, in the molding path (9), open into coolant connections (48) and coolant outlets (49) formed in the machine bed (1), **characterized**
**in that** each half shell (2, 2') has a core (30, 30', 52, 30"), which consists of a metal of a higher thermal conductivity and a lower specific gravity than steel,
in which the mold recess (43) is formed,
in which the vacuum ducts (41, 57) are formed at least substantially, and
which is sheathed at least in the shape of an L by a base body (29, 29', 54, 29") of steel, on which the bearing surface (36) is formed and on which rests the guide (11, 12).

2. An apparatus according to claim 1, **characterized in that** the core (30, 30', 52) is at least substantially provided with a rectangular cross section with outer surfaces (31a, 31b, 31c, 53a, 53b, 53c), on which rest inner surfaces (32a, 32b, 32c) of the base body (29, 29', 54).

3. An apparatus according to claim 1 or 2, **characterized in that** the base body (29, 29', 29") is formed in one piece.

4. An apparatus according to claim 3, **characterized in that** the base body (29, 29', 29") is approximately C-shaped and holds the core (30, 30').

5. An apparatus according to one of claims 1 to 3, **characterized in that** the coolant lines (37) are formed in the base body (29, 29', 29").

6. An apparatus according to claim 1 or 2, **characterized in that** the base body (54) is comprised of a lower plate (54c) and a plate-type vertical web (54b).

7. An apparatus according to claim 6, **characterized in that** the base body (54) is formed in two pieces.

8. An apparatus according to one of claims 1 to 7, **characterized in that** half shells (2, 2, 2', 2') which adjoin in the direction of production (4) in the molding path (9) bear against each other by their base bodies (29, 29, 29', 29', 54, 54).

9. An apparatus according to one of claims 1 to 8, **characterized in that** the half shells (2, 2') which combine in pairs to form a mold bear against each other by their base bodies (29, 29', 54, 54') in the molding path (9).

10. An apparatus according to one of claims 1 to 9, **characterized in that** the guide (11, 12) comprises guide rollers (11) mounted by means of rolling bearings.

11. An apparatus according to one of claims 1 to 10, **characterized in that** the core (30, 30', 52, 30") consists of aluminum or an aluminum alloy.

12. An apparatus according to claim 4, **characterized in that** the core (30") has a semi-cylindrical outer surface (31").

## Revendications

1. Dispositif pour la production de tuyaux ondulés en matière plastique (23) avec des cannelures transversales (24),
dans lequel, avec un trajet de moulage (9), s'étendant dans la direction de production (4), muni d'un évidement de moulage (43), sont disposées, guidées en circuit circulaire des moitiés de coquille (2,2') complétant un moule, respectivement par paires sur une table de machine horizontale (1), munie d'une plaque d'appui (28) en métal pour coussinet lisse,
dans lequel les moitiés de coquille (2,2') sont compressibles avec leurs faces d'appui inférieures (36) coulissant sur la plaque d'appui (28) et horizontalement et transversalement par rapport à la direction de production (4) au moyen d'un guidage (11,12),
dans lequel une tête de pulvérisation (25) d'une extrudeuse est disposée en amont du trajet de moulage (9),
dans lequel les moitiés de coquille (2,2') sont munies de canaux de vide (41,57) reliés à l'évidement de moulage respectif (43), qui aboutissent dans les raccordements de vide (45) formés dans le trajet de moulage (9) dans la table de machine (1), et
dans lequel les moitiés de coquille (2,2') sont munies de canaux de fluide réfrigérant (37,56) qui, dans le trajet de moulage (9) aboutissent dans les évacuations de fluide réfrigérant (49) et raccordements de fluide réfrigérant (48) formés dans le trajet de moulage (9) dans la table de la machine (1),
**caractérisé en ce que**,
les moitiés de coquille (2,2') présentent chacune un noyau (30,30',52,30"),
qui consiste en un métal ayant une conductivité thermique supérieure et un poids spécifique inférieur à l'acier,
dans lequel est formé l'évidement de moulage (43),
dans lequel au moins pour l'essentiel sont formés les canaux de vide (41,57) et
qui est entouré d'un corps de base (29,29',54,29") en acier pour le moins en forme de L, sur lequel est formée la face d'appui (36) et sur lequel s'appuie le guidage (11,12).

2. Dispositif selon Ia revendication 1,
**caractérisé en ce que**
le noyau (30,30',52) est constitué au moins pour l'essentiel d'une section transversale rectangulaire avec des faces extérieures (31a,31b,31c,53a,53b,53c) sur lesquelles s'appuie le corps de base (29,29',54) avec des faces intérieures (32a,32b,32c).

3. Dispositif selon la revendication 1 ou 2,
**caractérisé en ce que**
le corps de base (29,29',29") est conçu d'un seul tenant.

4. Dispositif selon la revendication 3,
**caractérisé en ce que**
le corps de base (29,29',29") est sensiblement en forme de C et reçoit le noyau (30,30').

5. Dispositif selon l'une des revendications 1 à 3,
**caractérisé en ce que**
les canaux de fluide réfrigérant (37) sont formés dans le corps de base (29,29',29").

6. Dispositif selon la revendication 1 ou 2,
**caractérisé en ce que**
le corps de base (54) est réalisé à partir d'une plaque inférieure (54c) et d'une aile verticale (54b) en forme de plaque.

7. Dispositif selon la revendication 6, **caractérisé en ce que** le corps de base (54) est formé en deux parties.

8. Dispositif selon l'une des revendications 1 à 7, **caractérisé en ce que** sur le trajet de moulage (9) dans la direction de production (4) sont situées côte à côte des moitiés de coquille adjacentes (2,2,2',2') respectivement avec leurs corps de base (29, 29, 29', 29', 54, 54).

9. Dispositif selon l'une des revendication 1 à 8, **caractérisé en ce que** sur le trajet de moulage (9) les moitiés de coquille (2,2') qui se complètent respectivement en une forme par paires sont situées côte à côte avec leurs corps de base (29, 29', 54, 54').

10. Dispositif selon l'une des revendication 1 à 9, **caractérisé en ce que** le guidage (11, 12) comporte des galets de guidage (11) logés au moyen de paliers à roulement.

11. Dispositif selon l'une des revendications 1 à 10, **caractérisé en ce que**, le noyau (30, 30', 52, 30") consiste en alliage d'aluminium.

12. Dispositif selon la revendication 4, **caractérisé en ce que**, le noyau (30") présente une face extérieure semi-cylindrique (31").
